# EUROPÄISCHE PATENTSCHRIFT

(11) **EP 3 812 601 B1**
(45) Veröffentlichungstag und Bekanntmachung des Hinweises auf die Patenterteilung: **20.09.2023**
(21) Anmeldenummer: 20203002.9
(22) Anmeldetag: 21.10.2020
(51) Int. Cl.: F16B 43/02, F16C 11/04, F16B 21/14, F16B 19/02, F16B 39/04

(54) **FORMTEIL, VERSTELLSICHERUNG MIT DEM FORMTEIL, LANDWIRTSCHAFTLICHE ARBEITSMASCHINE MIT DER VERSTELLSICHERUNG UND VERFAHREN ZUM MONTIEREN DER VERSTELLSICHERUNG**
SHAPED PART, SECURING DEVICE WITH THE SHAPED PART, AGRICULTURAL WORK MACHINE WITH THE SECURING DEVICE AND METHOD FOR MOUNTING THE SECURING DEVICE
PIÈCE FAÇONNÉE, SYSTÈME DE SÉCURITÉ CONTRE LE DÉPLACEMENT POURVU DE PIÈCE FAÇONNÉE, MACHINE DE TRAVAIL AGRICOLE POURVUE DE SYSTÈME DE SÉCURITÉ CONTRE LE DÉPLACEMENT ET PROCÉDÉ DE MONTAGE DU SYSTÈME DE SÉCURITÉ CONTRE LE DÉPLACEMENT

(30) Priorität: 22.10.2019 DE 102019007332
(43) Veröffentlichungstag der Anmeldung: 28.04.2021
(73) Patentinhaber: Maschinenfabrik Bernard Krone GmbH & Co. KG, 48480 Spelle (DE)
(72) Erfinder: Leifeling, Karl, 48477 Hörstel (DE)

(56) Entgegenhaltungen:
- EP-A1- 2 798 232
- EP-A1- 3 176 448
- DE-U1- 20 306 379
- US-A- 806 404
- US-A- 2 874 439
- US-A- 4 232 978
- US-B2- 9 523 379

## Beschreibung

Die vorliegende Erfindung betrifft eine Verstellsicherung mit einem Formteil zum Sichern eines Bolzens sowohl gegen ein Verdrehen als auch gegen ein axiales Verschieben, eine landwirtschaftliche Arbeitsmaschine mit einer solchen Verstellsicherung sowie ein Verfahren zum Montieren der Verstellsicherung. Ein axiales Verschieben eines ein Rahmenbauteil durchsetzenden Bolzens wird beispielsweise mittels eines den Bolzen durchsetzenden Stiftes verhindert. Der Stift dient als Anschlag und verhindert das Verschieben des Bolzens in eine Längsrichtung des Bolzens. Eine solche Sicherung verhindert aber nicht das Verdrehen des Bolzens in tangentialer Richtung um eine Längsachse des Bolzens. Um einen Bolzen gegen ein solches Verdrehen zu sichern, wird dieser beispielsweise am Rahmenbauteil angeschweißt.

Die Druckschrift DE 100 50 143 A1 offenbart eine Bolzensicherung, mit der ein Bolzen, der ein Rahmenbauteil durchsetzt, gegen ein axiales Verschieben und/oder Verdrehen gesichert wird. Die Bolzensicherung umfasst ein Sicherungselement, das ein sich zu einer Seite hin verjüngendes Langloch umfasst. Im Bolzen ist eine nutartige Vertiefung vorgesehen. Der Bolzen ist in das Langloch einschiebbar, so dass er dieses durchsetzt, und dann im Langloch verschiebbar, so dass eine Kante des Langlochs in die nutartige Vertiefung eingreift. Der das Sicherungselement so durchsetzende Bolzen wird durch Verschrauben des Sicherungselementes am Rahmenbauteil gegen das axiale Verschieben und/oder Verdrehen gesichert.

Die Druckschrift EP 2 798 232 A1 offenbart eine Verdrehsicherung für einen Bolzen zur Verwendung an einem Flugzeug. Diese umfasst ein inneres Sicherungsbauteil, das zur Verdrehsicherung des Bolzens vorgesehen ist und dazu mit mindestens einem Schenkel gegen seitliche Flanken des Bolzenkopfes anstößt, ein äußeres Sicherungsbauteil, das zur Verdrehsicherung des inneren Sicherungsbauteils vorgesehen ist und dazu mit mindestens einer Wand gegen die Schenkel des inneren Sicherungsbauteils anstößt, und ein Fixiermittel zur Befestigung des inneren Sicherungsbauteils am äußeren Sicherungsbauteil. Eine weitere, bekannnte Verdrehsicherung ist in der US 806 404 A offenbart.

Aufgabe der vorliegenden Erfindung ist es, eine alternative Verstellsicherung für einen Bolzen, insbesondere einer landwirtschaftlichen Arbeitsmaschine, zu schaffen, die den Bolzen nicht nur gegen das Verschieben in eine Raumrichtung, sondern zudem gegen das tangentiale Verdrehen um seine Längsachse sichert, die die Nutzung bereits gefertigter Bolzen ermöglicht, und die schnell und einfach, insbesondere werkzeuglos, montierbar und kostengünstig herstellbar ist.

Die Aufgabe wird gelöst mit einer Verstellsicherung mit den Merkmalen des unabhängigen

Anspruchs 1, einer landwirtschaftlichen Arbeitsmaschine mit den Merkmalen des unabhängigen Anspruchs 9 sowie einem Verfahren zum Montieren der Verstellsicherung mit den Merkmalen des unabhängigen Anspruchs 10. Vorteilhafte Ausführungsformen sind den abhängigen Ansprüchen entnehmbar.

Dafür wird eine Verstellsicherung geschaffen. Diese umfasst einen Bolzen, einen Stift, ein Rahmenbauteil und ein Formteil.

Das Formteil ist zum Sichern des Bolzens gegen ein Verdrehen vorgesehen. Zudem ist es zum Sichern des Bolzens gegen ein axiales Verschieben vorgesehen.

Ein Bolzen im Sinne der Erfindung weist eine zylindrische Form mit kreisrundem Querschnitt auf und erstreckt sich um eine Längsachse in und gegen eine Längsrichtung.

Das Formteil weist zum Sichern des Bolzens gegen ein Verdrehen und/oder axiales Verschieben einen Grundkörper auf, in dem eine Bolzenaufnahme zur Aufnahme des Bolzens angeordnet ist. Die Bolzenaufnahme weist bevorzugt eine bezüglich ihrer Form und ihrem Durchmesser so dem Querschnitt des Bolzens angepasste Kontur auf, dass der Bolzen in oder gegen die Längsrichtung in die Bolzenaufnahme einsteckbar ist. Der eingesteckte Bolzen ist dann in der Bolzenaufnahme um die Längsachse verdrehbar und in und gegen die Längsachse verschiebbar.

Das Formteil weist eine Haltenase auf, die sich vom Grundkörper ausgehend zu einem freien Ende hin erstreckt. Mit der Haltenase kann der Bolzen gegen ein Verschieben in oder gegen die Längsrichtung gesichert werden.

Weiterhin weist das Formteil eine Sicherungsnase auf, die sich vom Grundkörper ausgehend zu einem freien Ende hin erstreckt. Mit der Sicherungsnase kann der Bolzen gegen ein Verdrehen in und gegen eine tangentiale Richtung um die Längsachse gesichert werden.

Die Verstellsicherung zeichnet sich dadurch aus, dass im Bolzen eine Durchgangsbohrung zur Aufnahme des Stifts angeordnet ist, wobei im Rahmenbauteil eine Aufnahme für den Bolzen sowie eine Aussparung für die Sicherungsnase vorgesehen sind.

Das Formteil ermöglicht daher das Sichern des Bolzens sowohl gegen das axiale Verschieben in oder gegen die Längsrichtung als auch gegen das Verdrehen in und gegen die tangentiale Richtung um die Längsachse des Bolzens.

Bevorzugt weist die Haltenase dafür eine Durchführung zur Aufnahme des Stiftes auf. Die Durchführung ermöglicht das Befestigen des Formteils an einer definierten Position des Bolzens mittels des Stifts. Dabei kann der Stift als Anschlag dienen und ein Verschieben des Bolzens in oder gegen die Längsrichtung begrenzen.

In einer bevorzugten Ausführungsform ist das Formteil einstückig gefertigt. Dafür ist es bevorzugt, dass das Formteil aus einem Stanzbauteil gefertigt ist. Vorzugsweise ist es aus einem Flachbandmaterial, besonders bevorzugt aus einem Endlos-Flachbandmaterial, beispielsweise aus einem Blech, gefertigt. Dabei weist es bevorzugt eine konstante Dicke auf. In dieser Ausführungsform ist es besonders kostengünstig und schnell herstellbar. Es kann aber auch Verstärkungen, insbesondere im Bereich von Anbindungen der Haltenase und/oder der Sicherungsnase an den Grundkörper, aufweisen.

Dafür wird das Formteil bevorzugt zunächst aus dem Flachbandmaterial gestanzt. Die Sicherungsnase und/oder die Haltenase des aus dem Flachbandmaterial gestanzten Stanzbauteils erstrecken sich in derselben Ebene wie der Grundkörper. Anschließend werden die Sicherungsnase und/oder die Haltenase bevorzugt aus dem Stanzbauteil herausgebogen. Bevorzugt sind sowohl die Sicherungsnase als auch die Haltenase aus dem Grundkörper herausgebogen. Besonders bevorzugt erstreckt sich die Sicherungsnase und/oder die Haltenase des Formteils in einem im Wesentlichen rechten Winkel zu einer durch den Grundkörper gebildeten Ebene. Die Sicherungsnase und/oder die Haltenase können sich aber prinzipiell auch in einem anderen Winkel zum Grundkörper erstrecken.

Weiterhin kann das Formteil auch mehrstückig gebildet sein, und die Sicherungsnase und/oder die Haltenase beispielsweise durch ein Verschweißen, Verschrauben oder ähnlich am Grundkörper befestigt sein. Eine einstückige Herstellung des Formteils ist aber im Vergleich dazu stabiler, weniger aufwändig und kostengünstiger.

Dabei ist es bevorzugt, dass das Formteil zu mindestens einer Symmetrieebene spiegelsymmetrisch ausgebildet ist. Die Symmetrie vereinfacht die Montage des Formteils. Dafür können sich die Haltenase und die Sicherungsnase in derselben Raumebene, in zueinander parallelen Raumebenen oder in quer zueinander angeordneten Raumebenen erstrecken.

Vorzugsweise sind die Sicherungsnase und/oder die Haltenase an die Bolzenaufnahme angrenzend angeordnet. Dabei kann sich die Sicherungsnase und/oder die Haltenase des ausgestanzten Stanzbauteils jeweils von dem Grundkörper ausgehend in die Bolzenaufnahme hinein erstrecken. Das Formteil wird durch Biegen der Sicherungsnase und der Haltenase aus dem Grundkörper hergestellt. Dadurch ist die Bolzenaufnahme des Formteils in einem Bereich der aus dem Grundkörper herausgebogenen Sicherungsnase und in einem Bereich der aus dem Grundkörper herausgebogenen Haltenase um die Sicherungsnase und die Haltenase vergrößert. Die Ausmaße der Bolzenaufnahme können dabei so bemessen sein, dass der Bolzen erst dadurch in die Bolzenaufnahme einschiebbar ist. Vorzugsweise weist die Bolzenaufnahme dieser Ausführungsform zumindest bereichsweise, insbesondere jeweils zwischen der Sicherungsnase und der Haltenase, einen kreisrunden Querschnitt auf. Zudem ist es bevorzugt, dass die Bolzenaufnahme in den Bereichen mit kreisrundem Querschnitt denselben oder einen nur unwesentlich größeren Durchmesser als der Bolzen aufweist. Dadurch ist das Formteil trotz der aufgrund der Haltenase und der Sicherungsnase vergrößerten Bereiche spielfrei am Bolzen anordbar.

Es ist ebenfalls eine Ausführungsform bevorzugt, bei der die Sicherungsnase und/oder die Haltenase von der Bolzenaufnahme beabstandet sind. Dabei können die Sicherungsnase und/oder die Haltenase auch als Ausbuchtung oder Anformung des Grundkörpers ausgebildet sein. Weiterhin können sie an einem Rand, insbesondere an einem Ende, des Grundkörpers positioniert sein. In einer bevorzugten Ausführungsform sind die Sicherungsnase und die Haltenase an gegenüberliegenden Enden des Grundkörpers angeordnet.

Weiterhin bevorzugt sind die Haltenase und die Sicherungsnase an gegenüberliegenden Seiten der Bolzenaufnahme angeordnet. Ein Abstand zwischen der Sicherungsnase und der Haltenase ist dann möglichst groß. Alternativ können sie in einer tangentialen Richtung um die Bolzenaufnahme in einem Winkel, insbesondere in einem rechten Winkel, zueinander versetzt angeordnet sein. Es ist aber ebenfalls bevorzugt, dass das Formteil mehr als eine Haltenase und/oder mehr als eine Sicherungsnase aufweist. Dabei ist es besonders bevorzugt, dass das Formteil zwei Haltenasen aufweist, die an gegenüberliegenden Seiten der Bolzenaufnahme angeordnet sind, und/oder dass es zwei Sicherungsnasen aufweist, die an gegenüberliegenden Seiten der Bolzenaufnahme angeordnet sind.

Dafür kann das Formteil in einer ersten bevorzugten Ausführungsform im Wesentlichen ringförmig ausgebildet sein. In dieser Ausführungsform erstreckt sich der Grundkörper im Wesentlichen entlang einer Ebene. Dabei können die Sicherungsnase und die Haltenase an derselben Seite des Grundkörpers oder an gegenüberliegenden Seiten des Grundkörpers angeordnet sein.

In einer zweiten bevorzugten Ausführungsform ist das Formteil im Wesentlichen u-förmig ausgebildet. Dabei können die Sicherungsnase und/oder die Haltenase einen freien Schenkel des Formteils bilden, oder in oder an einem Schenkel des Formteils angeordnet sein. Die Bolzenaufnahme ist bevorzugt in einer die Schenkel verbindenden Strebe angeordnet. Die Sicherungsnase und die Haltenase können auch bei dieser Ausführungsform in tangentialer Richtung um die Bolzenaufnahme um einen Winkel zueinander versetzt angeordnet sein. Weiterhin können sie aus der die Schenkel verbindenden Strebe herausgebogen sein.

Gegenüber einer herkömmlichen Verschiebesicherung, die den das Rahmenbauteil durchsetzenden Bolzen mittels des Stiftes nur gegen das Verschieben in oder gegen die Längsrichtung sichert, weist diese Verstellsicherung zusätzlich das Formteil auf. Mittels des Formteils wird der Bolzen auch gegen ein tangentiales Verdrehen um die Längsachse gesichert.

Die Verstellsicherung weist eine Verschiebesicherung auf, die form- und/oder kraftschlüssig mit dem Bolzen zusammenwirkt. Die Verschiebesicherung umfasst eine Haltenase, die sich vom Grundkörper ausgehend zu einem freien Ende hin erstreckt. In der Haltenase ist eine Durchführung vorgesehen. Zudem umfasst sie einen Stift. Im montierten Zustand durchsetzt der Stift die Haltenase sowie die Durchgangsbohrung durch den Bolzen. Dadurch ist der Bolzen gegen ein Verdrehen in und gegen eine tangentiale Richtung um die Längsachse gesichert.

Weiterhin weist die Verstellsicherung eine Verdrehsicherung auf. Die Verdrehsicherung wirkt form- und/oder kraftschlüssig mit einem Rahmenbauteil zusammen, welches zum Lagern des Bolzens vorgesehen ist. Dafür weist sie eine Sicherungsnase auf, die sich vom Grundkörper ausgehend zu einem freien Ende hin erstreckt. Zudem weist sie eine Aussparung auf, die am Rahmenbauteil angeordnet ist. Im montierten Zustand greift die Sicherungsnase in die Aussparung ein. Die Verdrehsicherung ist dafür vorgesehen, den Bolzen gegen ein Verdrehen in und gegen eine tangentiale Richtung um die Längsachse zu sichern.

Das Formteil ermöglicht die Nutzung herkömmlicher Bauteile, insbesondere herkömmlicher Bolzen und Stifte. Da die Verstellsicherung gegenüber der herkömmlichen Verschiebesicherung nur das zusätzliche Formteil erfordert, kann sie nachgerüstet werden. Beim Nachrüsten muss das Rahmenbauteil mit einer zur Sicherungsnase korrespondierend ausgebildeten Aussparung versehen werden.

Im Bolzen ist eine Durchgangsbohrung zur Aufnahme des Stifts angeordnet. Bevorzugt durchsetzt der Stift im montierten Zustand der Verstellsicherung sowohl die Durchgangsbohrung des Bolzens als auch die Durchführung zur Aufnahme des Stiftes in der Haltenase des Formteils. Dadurch ermöglicht die Durchgangsbohrung das Befestigen des Formteils am Bolzen mittels des Stiftes.

Im Rahmenbauteil sind die Aufnahme für den Bolzen sowie die Aussparung für die Sicherungsnase vorgesehen. Die Sicherungsnase ist in die Aussparung einfügbar. Dafür ist es weiterhin vorgesehen, dass die Aussparung und die Sicherungsnase, insbesondere in Bezug auf ihre Form und Ausmaße, korrespondierend zueinander ausgebildet sind. Bei in die Aussparung eingreifender Sicherungsnase ist das Formteil nicht mehr gegenüber dem Rahmenbauteil verdrehbar.

In einer bevorzugten Ausführungsform kann die für den Bolzen vorgesehene Aufnahme im Rahmenbauteil an die Aussparung angrenzt angeordnet sein. In Abhängigkeit von der Positionierung der Sicherungsnase des Formteils kann die Aussparung aber auch von der Aufnahme beabstandet angeordnet sein.

Die Verstellsicherung sieht in einer besonders bevorzugten Ausführungsform vor, dass der Bolzen durch die Aufnahme des Rahmenbauteils geführt ist, so dass die Durchgangsbohrung für den Stift an einer die Aussparung aufweisenden Seite des Rahmenbauteils angeordnet ist, wobei das Formteil an der die Aussparung aufweisenden Seite des Rahmenbauteils auf den Bolzen aufgeschoben ist, so dass die Sicherungsnase in die Aussparung eingreift, und die Durchgangsbohrung an der dem Rahmenbauteil abgewandten Seite des Formteils angeordnet ist, wobei der Stift in die Durchführung der Haltenase sowie in die Durchgangsbohrung eingeführt ist, so dass er sowohl die Haltenase als auch die Durchgangsbohrung durchsetzt.

Da die Sicherungsnase in die Aussparung des Rahmenbauteils eingreift, ist das Formteil nicht mehr um die Längsachse verdrehbar. Da weiterhin der Stift sowohl die Haltenase als auch den Bolzen durchsetzt, ist das Formteil am Bolzen befestigt. Somit ist auch der Bolzen nicht mehr verdrehbar.

Zudem wirkt das Formteil als Anschlag für den Bolzen, so dass dieser nicht mehr in oder gegen die Längsrichtung verschiebbar ist. Um den Bolzen auch gegen ein Verschieben in die entgegen gesetzte Längsrichtung zu sichern, kann eine zusätzliche Verschiebesicherung, beispielsweise mittels einer weiteren Verstellsicherung oder nur eines weiteren Stiftes, an einer der Verstellsicherung abgewandten Seite des Rahmenbauteils vorgesehen sein. Alternativ kann ein Bolzen mit einem als Anschlag wirkenden verbreiterten Ende genutzt werden.

Die Aufgabe wird ebenfalls gelöst mit einer landwirtschaftlichen Arbeitsmaschine mit einer solchen Verstellsicherung. Die Verstellsicherung wird bevorzugt für Bolzen genutzt, die zum Lagern von verdrehbaren Bauteilen dienen. Solche Bauteile sind regelmäßig mittels Drehlager wie beispielsweise Kugellager, Rollenlager oder Wälzlager am Bolzen gelagert. Bei schwergängigem Drehlager kann Verschleiß durch Verdrehen des Bolzens verursacht sein. Die Verstellsicherung vermindert oder verhindert einen solchen Verschleiß am Bolzen.

Die Erfindung ist bei jeder landwirtschaftlichen Arbeitsmaschine anwendbar. Bevorzugt wird sie bei Heuwerbungsmaschinen, insbesondere bei einem Zettwender oder Kreiselschwader, genutzt.

Die Aufgabe wird ebenfalls gelöst mit einem Verfahren zum Montieren einer solchen Verstellsicherung, mit den Schritten:
a) Einschieben eines Bolzens in oder gegen eine Längsrichtung durch eine Aufnahme eines Rahmenbauteils, so dass eine Durchgangsbohrung im Bolzen an einer eine Aussparung aufweisenden Seite des Rahmenbauteils angeordnet ist;
b) Aufschieben eines Formteils gegen die Längsrichtung auf den Bolzen, so dass dieses am Rahmenbauteil anliegt, eine Sicherungsnase des Formteils in die Aussparung des Rahmenbauteils eingreift, und eine Durchgangsbohrung im Bolzen an der dem Rahmenbauteil abgewandten Seite des Formteils angeordnet ist; und
c) Einführen eines Stiftes durch eine Durchführung in einer Haltenase des Formteils und die Durchgangsbohrung des Bolzens, so dass der Stift die Durchführung sowie die Durchgangsbohrung durchsetzt.

Die Montage ist sehr schnell und einfach, insbesondere werkzeugfrei, durchführbar. Zudem ist die Verstellsicherung durch Entnahme des Stiftes auch sehr schnell und einfach wieder demontierbar.

Im Folgenden wird die Erfindung anhand von Figuren beschrieben. Die Figuren sind lediglich beispielhaft und schränken den allgemeinen Erfindungsgedanken nicht ein. Es zeigen
- Fig. 1: einen Ausschnitt aus einer landwirtschaftlichen Arbeitsmaschine mit einer Verstellsicherung, die einen Bolzen und ein erfindungsgemäßes Formteil umfasst;
- Fig. 2: in (a) ein erfindungsgemäßes Formteil für die Verstellsicherung aus Fig. 1 in einer perspektivischen Ansicht, und in (b) ein Stanzbiegebauteil zur Herstellung des Formteils;
- Fig. 3: einen vergrößerten Ausschnitt aus der landwirtschaftlichen Arbeitsmaschine der Fig. 1 mit der Verstellsicherung, wobei in (a) die Verstellsicherung in einer unmontierten explosionsartigen Darstellung, und in (b) die montierte Verstellsicherung gezeigt sind; und
- Fig. 4 - 6: jeweils eine weitere Ausführungsform eines erfindungsgemäßen Formteils, wobei jeweils in (a) das Formteil in einer perspektivischen Ansicht, und in (b) ein Stanzbauteil zur Herstellung des Formteils gezeigt sind.

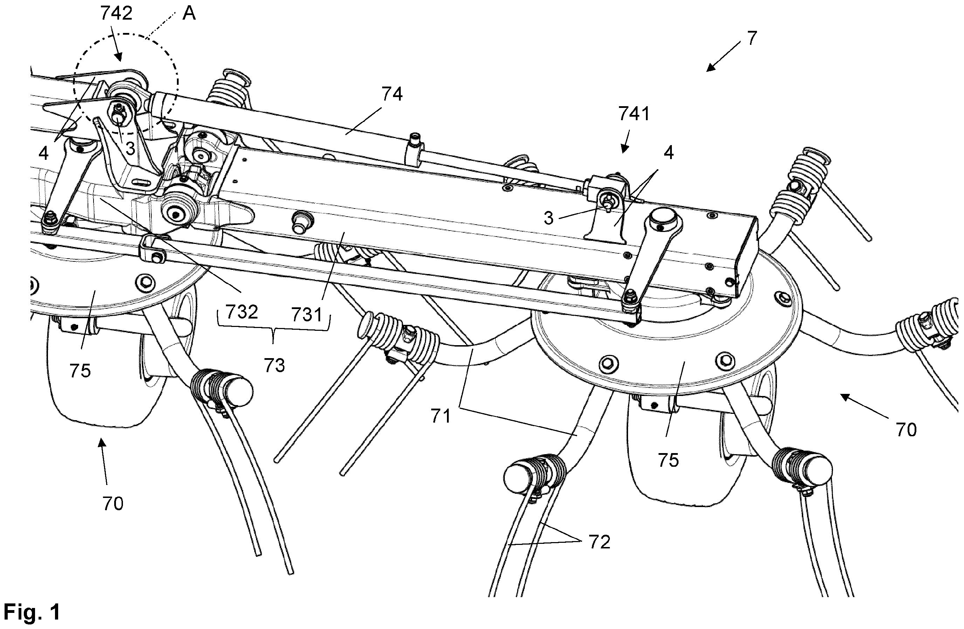

Fig. 1 zeigt einen Ausschnitt aus einer landwirtschaftlichen Arbeitsmaschine 7, hier einer Heuwerbungsmaschine, nämlich einem Zettwender. Im Folgenden werden die Begriffe landwirtschaftliche Arbeitsmaschine 7, Heuwerbungsmaschine und Zettwender synonym verwendet.

Der Zettwender 7 weist Zettkreisel 70 zum Wenden von landwirtschaftlichem Erntegut auf, die an einem Ausleger 73 um eine Drehachse (nicht gezeigt) drehbar angeordnet sind. Zum Wenden des Ernteguts weisen die Zettkreisel 70 jeweils einen Kreiselteller 75 auf, an dem Arme 71 gleichmäßig verteilt angeordnet sind, welche sich etwa strahlenförmig von der Drehachse ausgehend erstrecken. Die Anzahl der Arme 71 beträgt hier sechs. Es können aber mehr oder weniger Arme 71 vorgesehen sein. An den Armen 71 sind Zinken 72 angeordnet, mit denen das auf dem Boden (nicht gezeigt) liegende Erntegut angehoben und abgeworfen werden kann. Die Kreiselteller 75 sind dafür um eine sich quer zum Boden erstreckende Achse (nicht gezeigt) drehbar vorgesehen.

Mittig jedes der Kreiselteller 75 ist jeweils ein Rad (nicht bezeichnet) befestigt, mit dem der Zettkreisel 70 über den Boden geführt ist.

Der Ausleger 73 umfasst einen ersten, außen angeordneten Auslegerteil 731, der einen Zettkreisel 70 trägt und gegenüber einem zweiten Auslegerteil 732, der ebenfalls einen Zettkreisel 70 trägt, mittels eines Hydraulikzylinders 74 verschwenkbar ist. Dadurch ist der erste Auslegerteil 731 von einer Betriebsposition (nicht bezeichnet) in eine Transportposition (nicht gezeigt) und zurück verstellbar. In der Transportposition ist der erste Auslegerteil 731 um einen Winkel (nicht gezeigt), insbesondere etwa rechten Winkel, gegenüber dem zweiten Auslegerteil 732 verschwenkt angeordnet.

Ein erstes Ende 741 des Hydraulikzylinders 74 ist dafür am ersten Auslegerteil 731 befestigt. Ein zweites Ende 742 des Hydraulikzylinders 74 ist dafür am zweiten Auslegerteil 732 des Auslegers 73 befestigt. Beide Enden 741, 742 des Hydraulikzylinders 74 sind jeweils drehbar an ihrem Auslegerteil 731, 732 angelenkt.

Zum Befestigen des Hydraulikzylinders 74 sind an beiden Enden 741, 742 jeweils zwei Rahmenbauteile 4 am Auslegerteil 731, 732 festgelegt, hier angeschweißt, zwischen denen sich ein Bolzen 3 erstreckt, der drehfest zwischen den Rahmenbauteilen 4 gelagert ist. Die Bolzen 3 dienen jeweils als Lager für ein Drehlager des Hydraulikzylinders 74.

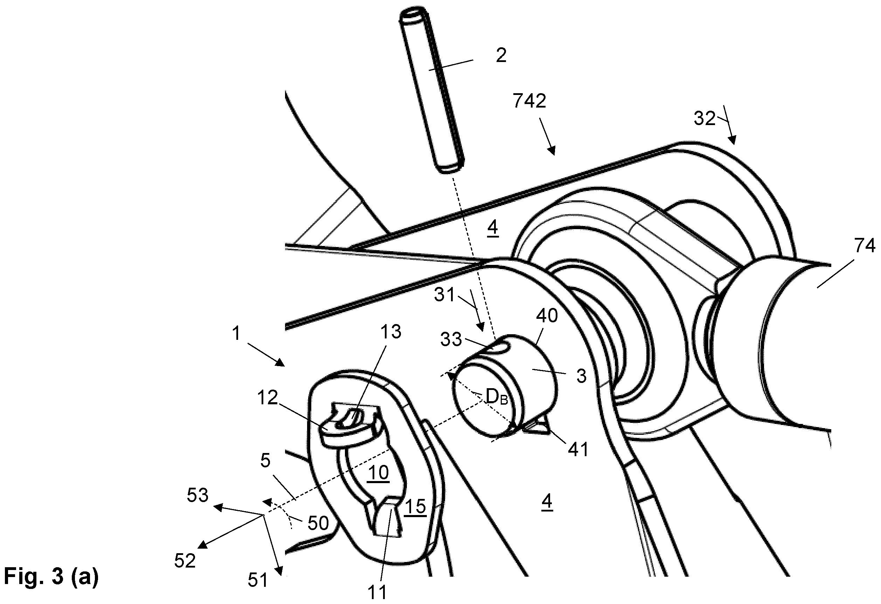

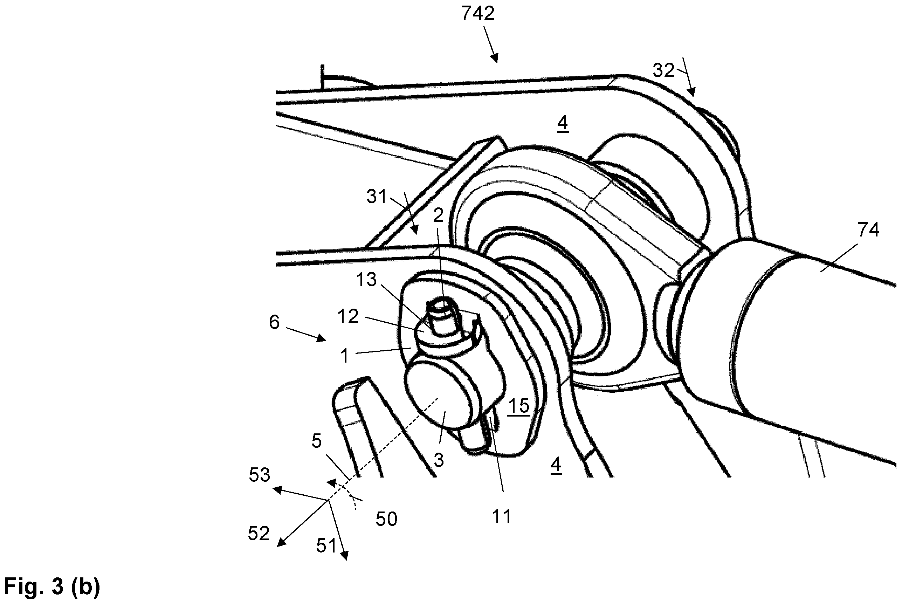

Der Bolzen 3 am ersten Ende 741 des Hydraulikzylinders 74 ist in herkömmlicher Weise gegen ein Verdrehen und Verschieben gegenüber den Rahmenbauteilen 4 gesichert, mit denen er am Ausleger befestigt ist. Am zweiten Ende 742 ist hingegen eine Verstellsicherung 6 (s. Fig. 3 (b)) zum Sichern des Bolzens gegen Verdrehen und Verschieben vorgesehen. Daher ist das zweite Ende 742 des Hydraulikzylinders 74 in den Fig. 3 (a) und (b) vergrößert dargestellt.

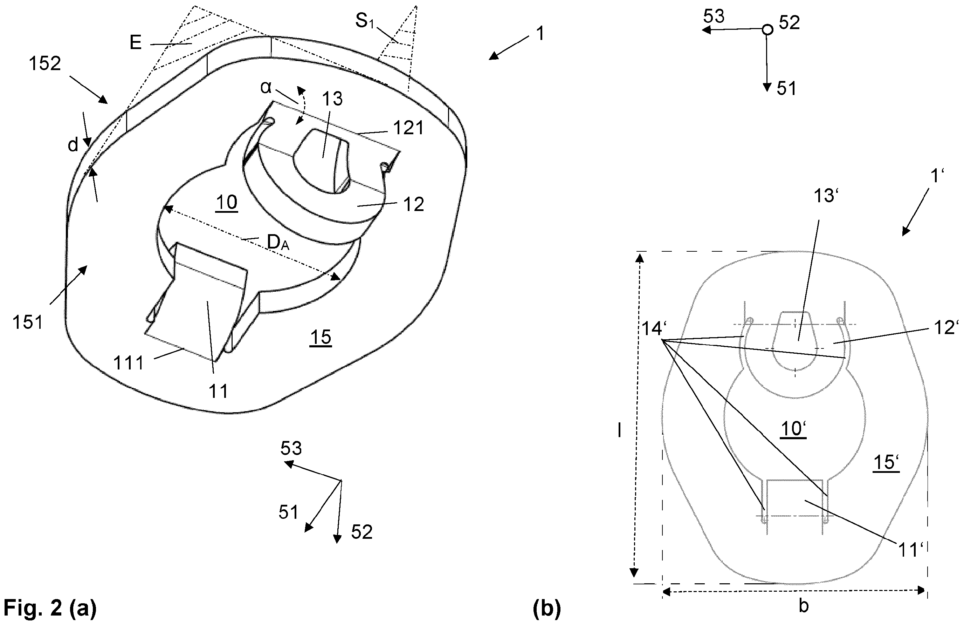

Die Verstellsicherung umfasst ein erfindungsgemäßes Formteil, das im Folgenden zunächst anhand der Fig. 2 (a) und (b) beschrieben wird.

Fig. 2 zeigt in (a) das erfindungsgemäße Formteil 1 für die Verstellsicherung 6. In Fig. 2 (b) ist ein Stanzbauteil 1' dargestellt, aus dem das Formteil 1 der Fig. 2 (a) hergestellt ist.

Das Formteil 1 weist einen Grundkörper 15 auf, in dem eine Bolzenaufnahme 10 zur Aufnahme eines Bolzens 3 (s. Fig. 3) angeordnet ist. Der Grundkörper 15 erstreckt sich in einer Ebene E, hier quer zu einer Längsrichtung 52. Die Ebene E ist durch Linien (nicht bezeichnet) entlang einer Einsteckrichtung 51 und entlang einer Erstreckungsrichtung 53 aufgespannt. Dabei weist der Grundkörper 15 im hier gezeigten Ausführungsbeispiel eine größere Länge I als Breite b auf. Es ist aber auch eine andere Form möglich. Zudem weist der Grundkörper 15 hier eine konstante Dicke d auf. Es können aber auch Verstärkungen (nicht gezeigt) am Grundkörper 15 vorgesehen sein, so dass der Grundkörper 15 bereichsweise dicker gegenüber anderen Bereichen des Grundkörpers 15 ausgebildet ist.

Die Bolzenaufnahme 10 ist etwa mittig des Grundkörpers 15 angeordnet. Das Formteil 1 ist daher etwa ringförmig ausgebildet. Die Bolzenaufnahme 10 ist korrespondierend zu dem Bolzen 3 ausgebildet, auf den sie aufgesteckt wird. Sie eignet sich zur Aufnahme eines zylindrisch geformten Bolzens 3 mit kreisrundem Querschnitt (nicht bezeichnet). Dafür ist sie bereichsweise kreisrund ausgebildet und weist einen Durchmesser D_{A} auf, der geringfügig größer als der Bolzendurchmesser D_{B} ist. In den Bereichen, in denen die Bolzenaufnahme 10 nicht kreisrund ausgebildet ist, weist sie zumindest denselben Durchmesser D_{A} auf oder ist größer ausgebildet. Daher ist der Bolzen 3 so in die Bolzenaufnahme 10 einsteckbar, dass er diese durchsetzt. Der in die Bolzenaufnahme 10 eingesteckte Bolzen 3 erstreckt sich in seine Längsrichtung 52 quer zur Ebene E.

Zudem weist das Formteil 1 eine Sicherungsnase 11 und eine Haltenase 12 auf. Die Haltenase 12 ist zum Sichern des Bolzens 3 gegen ein Verschieben hier gegen die Längsrichtung 52 vorgesehen. Die Sicherungsnase 11 ist zum Sichern des Bolzens 3 gegen ein Verdrehen in und gegen eine tangentiale Richtung 50 um die Längsachse 52 vorgesehen. Die Sicherungsnase 11 ist entlang einer ersten, linienförmigen Anbindung 111, und die Haltenase 12 entlang einerzweiten, linienförmigen Anbindung 121 aus dem Grundkörper 15 herausgebogen. Dadurch erstrecken sich die Haltenase 12 und die Sicherungsnase 11 in einem etwa rechten Winkel α zum Grundkörper 15.

Die Haltenase 12 erstreckt sich hier vom Grundkörper 15 ausgehend in die Längsrichtung 52, wobei sich die Sicherungsnase 11 hier vom Grundkörper 15 ausgehend gegen die Längsrichtung 52 erstreckt. Die Sicherungsnase 11 und die Haltenase 12 sind daher an gegenüberliegenden Seiten 151, 152 des Grundkörpers 15 angeordnet. Zudem sind die Haltenase 12 und die Sicherungsnase 11 an einander gegenüberliegenden Seiten (nicht bezeichnet) der Bolzenaufnahme 10 angeordnet. Sie sind spiegelsymmetrisch ausgebildet. Dadurch ist das Formteil 1 insgesamt spiegelsymmetrisch zu einer die Haltenase 12 und die Sicherungsnase 11 mittig durchsetzenden Spiegelfläche S1 ausgebildet.

In der Haltenase 12 ist weiterhin eine Durchführung 13 angeordnet. Die Durchführung 13 durchsetzt die Haltenase 12, so dass ein Stift 2 (s. Fig. 2) in die Durchführung 13 einschiebbar ist.

Das Formteil 1 ist einstückig aus einem Stanzbauteil 1' (s. Fig. 2 (b)) gefertigt, das aus einem Flachbandmaterial ausgestanzt ist.

Das Stanzbauteil 1' weist einen Grundkörper 15`, eine Sicherungsnase 11' sowie eine Haltenase 12' auf. Dabei erstrecken sich die Sicherungsnase 11' und die Haltenase 12' des Stanzbauteils 1' in der Ebene E quer zur Längsachse 52. Zwischen dem Grundkörper 15' und der Sicherungsnase 11' sowie zwischen dem Grundkörper 15' und der Haltenase 12' sind jeweils Einschnitte 14' vorgesehen. Die Einschnitte 14' sind so geformt, dass eine Kontur (nicht bezeichnet) der Sicherungsnase 11' und der Haltenase 12' des Stanzbauteils 1' einer Kontur (nicht bezeichnet) der Sicherungsnase 11 und der Haltenase 12 des Formteils 1 entspricht. Zudem weist das Stanzbauteil 1' eine Bolzenaufnahme 10' auf, deren Kontur (nicht bezeichnet) in den kreisrund ausgebildeten Bereichen einer Kontur (nicht bezeichnet) der Bolzenaufnahme 10 des Formteils 1 entspricht.

Die Sicherungsnase 11' und die Haltenase 12' werden zur Herstellung des Formteils 1 entlang der Anbindungen 111, 121 gebogen. Dabei wird die Sicherungsnase 11' entlang der ersten der beiden Anbindungen 11 und die Haltenase 12' entlang der zweiten der beiden Anbindungen 121 in entgegen gesetzte Längsrichtungen 52 aus dem Grundkörper 15' herausgebogen, so dass sich die Haltenase 12' in die Längsrichtung 52 und die Sicherungsnase 11' gegen die Längsrichtung 52 erstreckt. Dabei wird die Bolzenaufnahme 10' um die herausgebogene Sicherungsnase 11' und die herausgebogene Haltenase 12' vergrößert.

Bei dem Formteil 1 ist die Bolzenaufnahme 10 im Bereich der Sicherungsnase 11 und der Haltenase 12 daher nicht kreisrund ausgebildet und bis zur Anbindung 111 der Sicherungsnase 11 und bis zur Anbindung 121 der Haltenase 12 vergrößert.

Das Formteil 1 ist gegen die Längsrichtung 52 auf den Bolzen 3 aufschiebbar. Dies zeigt Fig. 3 (a). Fig. 3 zeigt in (a) und (b) jeweils den Ausschnitt A der Fig. 1.

Dargestellt ist in (a) eine Verstellsicherung 6 in einer explosionsartigen Darstellung und in Fig. 3 (b) die montierte Verstellsicherung 6. Die Verstellsicherung 6 weist den Bolzen 3, das Formteil 1, einen Stift 2 und ein Rahmenbauteil 4 auf. In dem hier gezeigten Ausführungsbeispiel erstreckt sich der Bolzen 3 an dem zweiten Ende 742 des Hydraulikzylinders 74 zwischen dem Rahmenbauteil 4 und einem zweiten Rahmenbauteil 4. Die Rahmenbauteile 4 sind etwa parallel zueinander angeordnet und am Auslegearm 73 befestigt.

Der Bolzen 3 ist zwischen ihnen gelagert. Er wird zum Lagern eine Drehlagers (nicht gezeigt) des Hydraulikzylinders 74 genutzt. Die Verstellsicherung 6 soll einen Verschleiß am Bolzen 3 vermindern oder sogar verhindern, der beispielsweise bei schwergängigem Drehlager am Bolzen 3 und/oder einer Aufnahme 40 im Rahmenbauteil 4, die der Bolzen 3 durchsetzt, entstehen kann. Dafür sichert sie den Bolzen 3 nicht nur gegen ein Verschieben sondern auch gegen ein Verdrehen.

Das Rahmenbauteil 4 der Verstellsicherung 6 weist die Aufnahme 40 für den Bolzen 3 auf, die das Rahmenbauteil 4 vollständig durchsetzt. Zudem weist das Rahmenbauteil 4 eine Aussparung 41 für das Sicherungsbauteil 11 auf. Die Aussparung 41 grenzt hier unmittelbar an die Aufnahme 40 an. In diesem Ausführungsbeispiel durchsetzt auch die Aussparung 41 das Rahmenbauteil 4 vollständig. In Abhängigkeit von der Stärke des Rahmenbauteils 4 ist aber auch eine dieses nicht vollständig durchsetzende Aussparung 41 ausreichend.

Der Bolzen 3 ist zylindrisch ausgebildet, so dass er im Querschnitt kreisrund ist. Er erstreckt sich von einem ersten Ende 31 bis zu einem zweiten Ende 32. Der Bolzen 3 ist in Längsrichtung 52 durch die Aufnahme 40 des Rahmenbauteils 4 gesteckt. Am ersten Ende 31 des Bolzens 3 ist eine Durchgangsbohrung 33 angeordnet, die zur Aufnahme des Stiftes 2 vorgesehen ist. Der Stift 2 ist in eine Einsteckrichtung 51, die sich quer zur Längsrichtung 52 erstreckt, in die Durchgangsbohrung 33 einsteckbar.

Die Verdrehsicherung 6 wird montiert, indem der Bolzen 3 zunächst in oder gegen die Längsrichtung 52 durch die Aufnahme 40 des Rahmenbauteils 4 geführt wird, so dass eine im Bolzen 3 vorgesehene Durchgangsbohrung 33 an der die Aussparung 41 aufweisenden Seite des Rahmenbauteils 4 angeordnet ist.

Dann wird das Formteil 1 gegen die Längsrichtung 52 auf den Bolzen 3 aufgeschoben, bis es am Rahmenbauteil 4 anliegt. In diesem Zustand greift die Sicherungsnase 11 des Formteils 1 in die Aussparung 41 des Rahmenbauteils 4 ein. Dabei ist die Durchgangsbohrung 33 im Bolzen 3 an der dem Rahmenbauteil 4 abgewandten Seite (151) des Formteils 1 angeordnet.

Der Bolzen 3 kann dann so gedreht werden, dass die Durchgangsbohrung 33 und die Durchführung 13 in der Haltenase 12 des Formteils 1 fluchtend zueinander angeordnet sind. Danach wird das Formteil 1 befestigt, indem der Stift 2 durch die Durchführung 13 in der Haltenase 12 des Formteils 1 und die Durchgangsbohrung 33 im Bolzens 3 hindurchgeführt wird, bis er beide durchsetzt.

Die mittels des Stiftes 2 bewirkte formschlüssige Verbindung zwischen dem Formteil 1 und dem Bolzen 3 sowie die mittels des Eingriffs der Sicherungsnase 11 in die Aussparung 41 bewirkte formschlüssige Verbindung zwischen dem Rahmenbauteil 4 und dem Formteil 1 sichern den Bolzen 3 gegen ein Verdrehen. Auch bei schwergängigem Drehlager kann sich der Bolzen 3 daher nicht drehen, so dass ein Verschleiß, insbesondere im Bereich der Aufnahmen 40 der Rahmenbauteile 4, vermieden wird.

An dem zum Rahmenbauteil 4 der Verstellsicherung 6 parallelen zweiten Rahmenbauteil 4 kann ebenfalls einen solche Verstellsicherung 6 angeordnet sein.

Da die beschriebene Verstellsicherung 6 den Bolzen 3 bereits gegen ein Verdrehen sichert, reicht am zweiten Rahmenbauteil 4, insbesondere am zweiten Ende 32 des Bolzens 3, aber auch ein Stift 2 oder ein anderer Anschlag, der den Bolzen 3 lediglich gegen ein Verschieben in Längsrichtung 52 sichert.

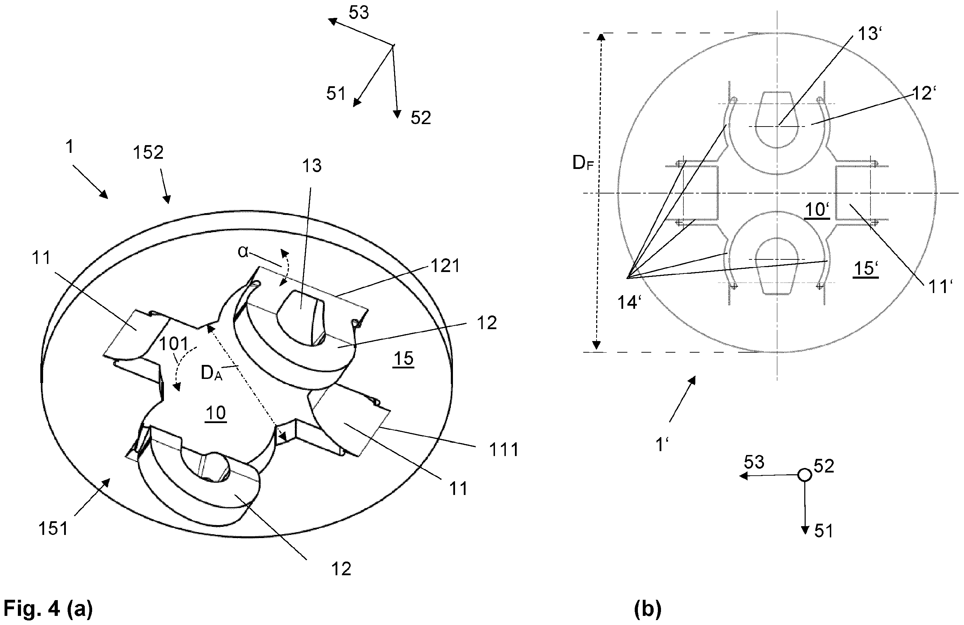

Die Fig. 4-6 zeigen jeweils weitere Ausführungsformen des Formteils 1, wobei jeweils in (a) das Formteil 1 in einer perspektivischen Ansicht, und in (b) ein Stanzbauteil 1' zur Herstellung des Formteils 1 gezeigt ist.

Gegenüber der Ausführungsform der Fig. 2 weist das Formteil 1 der Fig. 4 eine kreisrunde Kontur auf. Die Bolzenaufnahme 10 ist mittig angeordnet. Zudem weist das Formteil 1 der Fig. 4 zwei Haltenasen 12 und zwei Sicherungsnasen 11 auf, die an die Bolzenaufnahme 10 angrenzend angeordnet sind.

Die Sicherungsnasen 11 und die Haltenasen 12 sind aus dem Grundkörper 15 herausgebogen, so dass sie sich in einem etwa rechten Winkel α zum Grundkörper 15 erstrecken. Dabei sind sowohl die Sicherungsnasen 11 als auch die Haltenasen 12 an gegenüberliegenden Seiten der Bolzenaufnahme 10 angeordnet. Es wechseln sich daher immer eine Sicherungsnase 11 mit einer Haltenase 12 ab. Dabei sind die einander benachbarten Sicherungsnasen 11 und Haltenase 12 jeweils um eine rechten Winkel (nicht gezeigt) in tangentialer Richtung 101 um die Bolzenaufnahme 10 zueinander versetzt.

Das Formteil 1 ist daher zu einer die Sicherungsnasen 11 halbierenden Spiegelebene (nicht gezeigt) und zu einer die Haltenasen 12 halbierenden Spiegelebene (nicht gezeigt) spiegelsymmetrisch ausgebildet.

Dabei erstrecken sich die Haltenasen 12 und die Sicherungsnasen 11 auch hier in entgegen gesetzte Längsrichtungen 52.

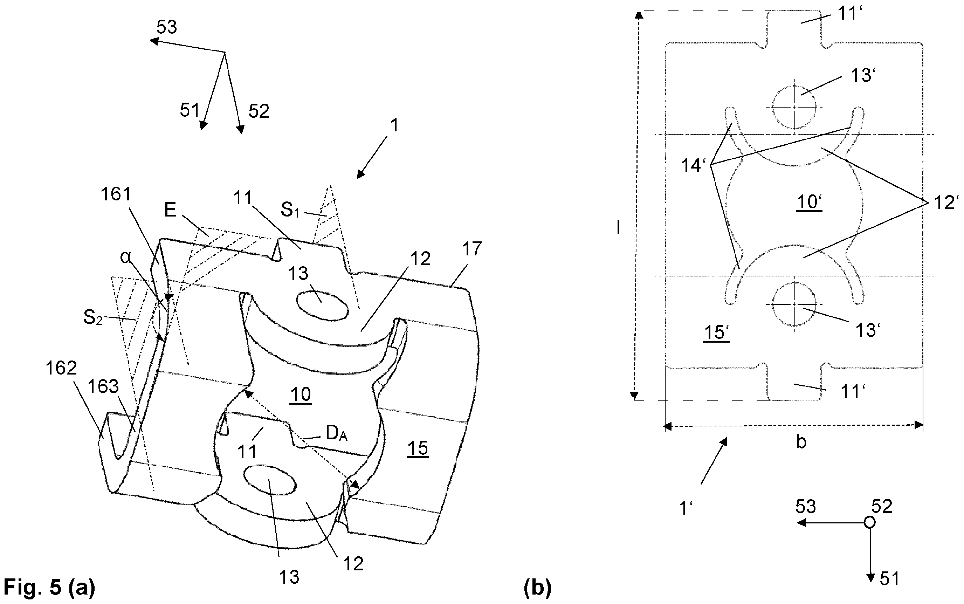

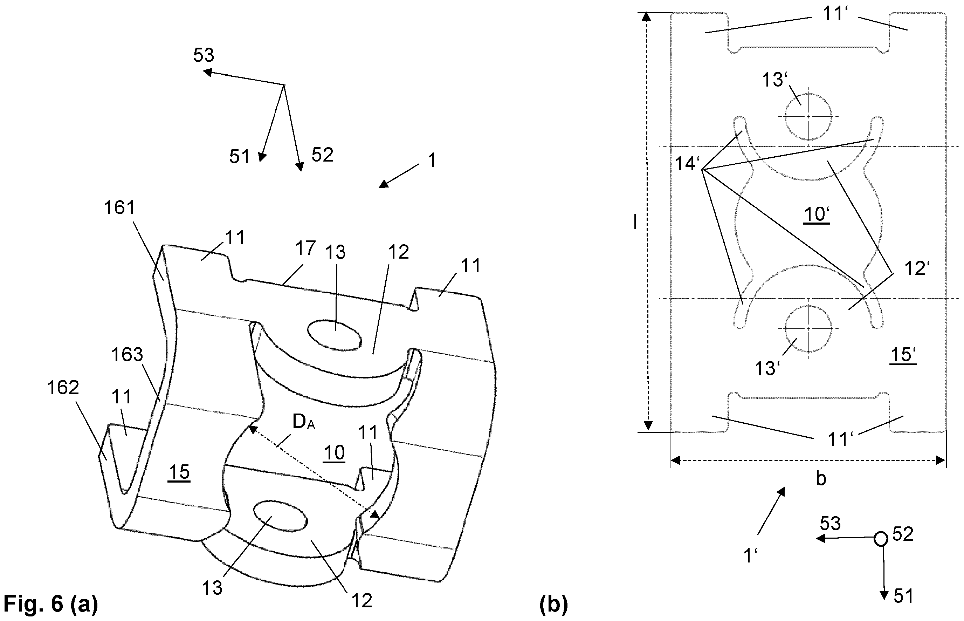

Die Ausführungsformen des Formteils 1 der Fig. 5 und 6 sind demgegenüber u-förmig ausgebildet. Daher weisen sie jeweils zwei freie Schenkel 161, 162 auf, die durch eine Strebe 163 miteinander verbunden sind.

Bei beiden Ausführungsformen sind die Formteile 1 einstückig aus einem Stanzbauteil 1' hergestellt. Die freien Schenkel 161, 162 sind dafür gegenüber der Strebe 163 um einen im Wesentlichen rechten Winkel α gebogen.

Die Bolzenaufnahme 10 ist bei beiden Ausführungsformen mittig der Strebe 163 angeordnet. Im Bereich der Strebe 163 weist die Bolzenaufnahme 10 einen kreisrunden Querschnitt auf. Zudem weisen beide Ausführungsformen jeweils zwei Haltenasen 12 auf, die an die Bolzenaufnahme 10 angrenzend und an gegenüberliegenden Seiten der Bolzenaufnahme 10 angeordnet sind.

Die Haltenasen 12 sind jeweils an einem der freien Schenkel 161, 162 angebunden. Sie werden daher beim Biegen der freien Schenkel 161, 162 gegenüber der Strebe 163 um den rechten Winkel α verstellt. Daher weisen sie gegenüber einer durch die Strebe 163 gebildeten Ebene E den rechten Winkel α auf.

Bei der Ausführungsform der Fig. 5 ist jeweils eine Sicherungsnase 11 am Rand 17 der beiden freien Schenkel 161, 162 angeordnet. Die Sicherungsnasen 11 sind jeweils fluchtend zur Haltenase 12 angeordnet. Auch die Sicherungsnasen 11 werden daher beim Biegen der freien Schenkel 161, 162 gegenüber der Strebe 163 um den rechten Winkel α verstellt. Daher weisen auch sie gegenüber der durch die Strebe 163 gebildeten Ebene E den rechten Winkel α auf.

Die Ausführungsform der Fig. 6 unterscheidet sich von der der Fig. 5 darin, dass am Rand 17 jedes Schenkels 161, 162 jeweils endseitig eine Sicherungsnase 11 angeordnet ist. Dieses Formteil 1 weist daher vier Sicherungsnasen 11 auf.

Beide Ausführungsformen sind zu einer ersten, mittig zwischen den freien Schenkeln 161, 162 verlaufenden Spiegelebene S1 und einer zweiten, die Haltenasen 12 halbierenden Spiegelebene S2 spiegelsymmetrisch ausgebildet.

## Patentansprüche

1. Verstellsicherung (6) umfassend einen Bolzen (3), einen Stift (2), ein Rahmenbauteil (4) und ein Formteil (1), wobei das Formteil (1) zum Sichern des Bolzens (3) sowohl gegen ein Verdrehen als auch gegen ein axiales Verschieben vorgesehen ist, und einen Grundkörper (15) aufweist, wobei in dem Grundkörper (15) eine Bolzenaufnahme (10) zur Aufnahme des Bolzens (3) angeordnet ist, wobei das Formteil (1) zudem eine Haltenase (12) und eine Sicherungsnase (11) aufweist, die sich jeweils vom Grundkörper (15) ausgehend zu einem freien Ende hin erstrecken, wobei im Bolzen (3) eine Durchgangsbohrung (33) zur Aufnahme des Stifts (2) angeordnet ist, **dadurch gekennzeichnet, dass** im Rahmenbauteil (4) eine Aufnahme (40) für den Bolzen (3) sowie eine Aussparung (41) für die Sicherungsnase (11) vorgesehen sind.

2. Verstellsicherung (6) nach Anspruch 1, **dadurch gekennzeichnet, dass** in der Haltenase (12) eine Durchführung (13) angeordnet ist, die die Haltenase (12) durchsetzt, so dass der Stift (2) in die Durchführung (13) einschiebbar ist.

3. Verstellsicherung (6) nach einem der vorherigen Ansprüche, **dadurch gekennzeichnet, dass** der Bolzen (3) durch die Aufnahme (40) des Rahmenbauteils (4) geführt ist, so dass die Durchgangsbohrung (33) für den Stift (2) an der die Aussparung (41) aufweisenden Seite des Rahmenbauteils (4) angeordnet ist, wobei das Formteil (1) an der die Aussparung (41) aufweisenden Seite des Rahmenbauteils (4) auf den Bolzen (3) aufgeschoben ist, so dass die Sicherungsnase (11) in die Aussparung (41) eingreift, und die Durchgangsbohrung (33) an der dem Rahmenbauteil (4) abgewandten Seite (151) des Formteils (1) angeordnet ist, wobei der Stift (2) in die Durchführung (13) der Haltenase (12) sowie in die Durchgangsbohrung (33) eingeführt ist, so dass er sowohl die Haltenase (12) als auch die Durchgangsbohrung (33) durchsetzt.

4. Verstellsicherung (6) nach einem der vorherigen Ansprüche, **dadurch gekennzeichnet, dass** sie an einem Ende (31, 32) des Bolzens (3) angeordnet ist.

5. Verstellsicherung (6) nach einem der vorherigen Ansprüche, **dadurch gekennzeichnet, dass** sich die Sicherungsnase (11) und/oder die Haltenase (12) in einem im Wesentlichen rechten Winkel (α) zu einer durch den Grundkörper (15) gebildeten Ebene (E) erstreckt.

6. Verstellsicherung (6) nach einem der vorherigen Ansprüche, **dadurch gekennzeichnet, dass** die Sicherungsnase (11) und/oder die Haltenase (12) an die Bolzenaufnahme (10) angrenzend angeordnet sind.

7. Verstellsicherung (6) nach einem der vorherigen Ansprüche, **dadurch gekennzeichnet, dass** die Haltenase (12) und die Sicherungsnase (11) an gegenüberliegenden Seiten der Bolzenaufnahme (10) angeordnet sind, oder in einer tangentialen Richtung (101) um die Bolzenaufnahme (10) in einem Winkel, insbesondere in einem rechten Winkel, zueinander versetzt angeordnet sind.

8. Verstellsicherung (6) nach einem der vorherigen Ansprüche, **dadurch gekennzeichnet, dass** sie zwei Haltenasen (12) aufweist, die an gegenüberliegenden Seiten der Bolzenaufnahme (10) angeordnet sind, und/oder dass sie zwei Sicherungsnasen (11) aufweist, die an gegenüberliegenden Seiten der Bolzenaufnahme (10) angeordnet sind.

9. Landwirtschaftliche Arbeitsmaschine (7), insbesondere Heuwerbungsmaschine, mit einer Verstellsicherung (6) nach einem der vorherigen Ansprüche.

10. Verfahren zum Montieren einer Verstellsicherung (6) nach einem der Ansprüche 1 - 8, mit den Schritten:
a) Einschieben eines Bolzens (3) in oder gegen eine Längsrichtung (52) durch eine Aufnahme (40) eines Rahmenbauteils (4), so dass eine Durchgangsbohrung (33) im Bolzen (3) an einer eine Aussparung (41) aufweisenden Seite des Rahmenbauteils (4) angeordnet ist;
b) Aufschieben eines Formteils (1) in oder gegen die Längsrichtung (52) auf den Bolzen (3), so dass dieses am Rahmenbauteil (4) anliegt, eine Sicherungsnase (11) des Formteils (1) in die Aussparung (41) des Rahmenbauteils (4) eingreift, und eine Durchgangsbohrung (33) im Bolzen (3) an der dem Rahmenbauteil (4) abgewandten Seite (151) des Formteils (1) angeordnet ist; und
c) Einführen eines Stiftes (2) durch eine Durchführung (13) in einer Haltenase (12) des Formteils (1) und die Durchgangsbohrung (33) des Bolzens (3), so dass der Stift (2) das Formteil (1) sowie den Bolzen (3) durchsetzt.

## Claims

1. An adjustment securing device (6) comprising a bolt (3), a pin (2), a frame component (4) and a molded part (1), the molded part (1) being provided for securing the bolt (3) both against rotation and against axial displacement, and having a base body (15),
wherein in the base body (15)
a bolt receptacle (10) for receiving the bolt (3) is arranged, the molded part (1) additionally having a retaining lug (12) and a securing lug (11) which each extend from the base body (15) to a free end, wherein a through-bore (33) for receiving the pin (2) is arranged in the bolt (3), **characterized in that**
a receptacle (40) for the bolt (3) and a recess (41) for the securing lug (11) are provided in the frame component (4).

2. The adjustment securing device (6) according to claim 1,
**characterized in that** a feedthrough (13) is arranged in the retaining lug (12), through which the retaining lug (12) passes, so that the pin (2) can be inserted into the feedthrough (13).

3. The adjustment securing device (6) according to any one of the preceding claims, **characterized in that** the bolt (3) is guided through the receptacle (40) of the frame component (4), so that the through-bore (33) for the pin (2) is arranged on the side of the frame component (4) having the recess (41), the molded part (1) being pushed onto the bolt (3) on the side of the frame component (4) having the recess (41), so that the securing lug (11) engages in the recess (41), and the through-bore (33) is arranged on the side (151) of the molded part (1) facing away from the frame component (4), the pin (2) being inserted into the feedthrough (13) of the retaining lug (12) and into the through-bore (33), so that it passes through both the retaining lug (12) and the through-bore (33).

4. The adjustment securing device (6) according to any one of the preceding claims, **characterized in that** it is arranged at one end (31, 32) of the bolt (3).

5. The adjustment securing device (6) according to any one of the preceding claims, **characterized in that** the securing lug (11) and/or the retaining lug (12) extends at an essentially right angle (α) to a plane (E) formed by the base body (15).

6. The adjustment securing device (6) according to any one of the preceding claims, **characterized in that** the securing lug (11) and/or the retaining lug (12) are arranged adjacent to the bolt receptacle (10).

7. The adjustment securing device (6) according to any one of the preceding claims, **characterized in that** the retaining lug (12) and the securing lug (11) are arranged on opposite sides of the bolt receptacle (10), or, in a tangential direction (101) about the bolt receptacle (10), are arranged offset relative to one another at an angle, in particular at a right angle.

8. The adjustment securing device (6) according to any one of the preceding claims, **characterized in that** it has two retaining lugs (12) which are arranged on opposite sides of the bolt receptacle (10), and/or **in that** it has two securing lugs (11) which are arranged on opposite sides of the bolt receptacle (10).

9. An agricultural working machine (7), in particular a haymaking machine, comprising an adjustment securing device (6) according to any one of the preceding claims.

10. A method for assembling an adjustment securing device (6) according to any one of claims 1 - 8, comprising the steps of:
a) inserting a bolt (3) in or against a longitudinal direction (52) through a receptacle (40) of a frame component (4), such that a through-bore (33) in the bolt (3) is arranged on a side of the frame component (4) having a recess (41);
b) pushing a molded part (1) in or against the longitudinal direction (52) onto the bolt (3), so that it rests against the frame component (4), a securing lug (11) of the molded part (1) engages in the recess (41) of the frame component (4), and a through-bore (33) in the bolt (3) is arranged on the side (151) of the molded part (1) facing away from the frame component (4); and
c) inserting a pin (2) through a feedthrough (13) in a retaining lug (12) of the molded part (1) and the through-bore (33) of the bolt (3), so that the pin (2) passes through the molded part (1) and the bolt (3).

## Revendications

1. Dispositif de sécurité (6) comprenant un goujon (3), une broche (2), un élément de châssis (4) et une pièce façonnée (1),
- la pièce façonnée (1) étant prévue pour maintenir le goujon (3) contre la rotation et le coulissement axial et ayant un corps de base (15),
- un logement de goujon (10) étant prévu dans le corps de base (15) pour recevoir le goujon (3),
- la pièce façonnée (1) ayant en outre un bec de retenue (12) et un bec de sécurité (11) qui s'étendent respectivement à partir du corps de base (15) vers une extrémité libre,
- le goujon (3) ayant un perçage traversant (33) recevant la broche (2), dispositif **caractérisé en ce que**
l'élément de châssis (4) comporte un logement (40) pour le goujon (3) ainsi qu'un évidement (41) pour le bec de sécurité (11).

2. Dispositif de sécurité (6) selon la revendication 1,
**caractérisé en ce que**
le bec de retenue (12) comporte un passage (13) traversant le bec de retenue (12) pour que la broche (2) puisse être coulissée dans le passage (13).

3. Dispositif de sécurité (6) selon l'une des revendications précédentes, **caractérisé en ce que**
le goujon (3) traverse le logement (40) de l'élément de châssis (4) de façon que le perçage traversant (33) pour la broche (2) se trouve sur le côté de l'élément de châssis (4) muni de l'évidement (41),
la pièce façonnée (1) étant emmanchée sur le goujon (3), sur le côté de l'élément de châssis (4) muni de l'évidement (41) de façon que le bec de sécurité (11) pénètre dans l'évidement (41) et que le perçage traversant (33) se trouve sur le côté (151) de la pièce façonnée (1) non tourné vers l'élément de châssis (4),
- la broche (2) étant engagée dans le passage (13) du bec de retenue (12) et dans le perçage traversant (33) de façon à traverser à la fois le bec de retenue (12) et le perçage traversant (33).

4. Dispositif de sécurité (6) selon l'une des revendications précédentes, **caractérisé en ce qu'**il est installé
à une extrémité (31, 32) du goujon (3).

5. Dispositif de sécurité (6) selon l'une des revendications précédentes, **caractérisé en ce que**
le bec de sécurité (11) et/ou le bec de retenue (12) font un angle (α) pratiquement droit par rapport au plan (E) formé par le corps de base (15).

6. Dispositif de sécurité (6) selon l'une des revendications précédentes, **caractérisé en ce que**
le bec de sécurité (11) et/ou le bec de retenue (12) sont adjacents au logement de goujon (10).

7. Dispositif de sécurité (6) selon l'une des revendications précédentes, **caractérisé en ce que**
le bec de retenue (12) et le bec de sécurité (11) sont sur les côtés opposés du logement de goujon (10) ou sont décalés l'un par rapport à l'autre dans la direction tangentielle (101) autour du logement de goujon (10) suivant un angle, notamment un angle droit.

8. Dispositif de sécurité (6) selon l'une des revendications précédentes, **caractérisé en ce qu'**il comporte
deux becs de retenue (12) sur les côtés opposés du logement de goujon (10) et/ou ayant deux becs de sécurité (11) sur les côtés opposés du logement de goujon (10).

9. Machine agricole (7), notamment faneuse comportant un dispositif de sécurité (6) selon l'une des revendications précédentes.

10. Procédé de montage d'un dispositif de sécurité (6) selon l'une des revendications 1 à 8,
consistant à :
a) engager un goujon (3) dans la direction longitudinale (52) ou dans la direction opposée dans un logement (40) d'un élément de châssis (4) de façon que le perçage traversant (33) du goujon (3) se trouve sur le côté de l'élément de châssis (4) ayant l'évidement (41),
b) engager une pièce façonnée (1) selon la direction longitudinale (52) ou la direction opposée sur le goujon (3) de façon qu'elle s'applique contre l'élément de châssis (4), le bec de sécurité (11) de la pièce façonnée (1) pénétrant dans l'évidement (41) de l'élément de châssis (4) et un perçage traversant (33) du goujon (3) sur le côté (151) de la pièce façonnée (1), opposé à l'élément de châssis (4), et
c) engager une broche (2) dans un passage (13) du bec de maintien (12) de la pièce façonnée (1) et le perçage traversant (33) du goujon (3) de façon que la broche (2) traverse la pièce façonnée (1) et le goujon (3).
